# EUROPÄISCHE PATENTSCHRIFT

(11) **EP 3 308 031 B1**
(45) Veröffentlichungstag und Bekanntmachung des Hinweises auf die Patenterteilung: **09.06.2021**
(21) Anmeldenummer: 16722525.9
(22) Anmeldetag: 06.05.2016
(51) Int. Cl.: F15B 13/02, F15B 13/04, F16K 17/04

(54) **DRUCKREGELVENTIL**
PRESSURE CONTROL VALVE
SOUPAPE DE RÉGULATION DE PRESSION

(30) Priorität: 11.06.2015 DE 102015007689
(43) Veröffentlichungstag der Anmeldung: 18.04.2018
(73) Patentinhaber: Hydac Fluidtechnik GmbH, 66280 Sulzbach/Saar (DE)
(72) Erfinder: HEß, Maximilian Felix, 66117 Saarbrücken (DE); BILL, Markus, 66265 Heusweiler (DE)
(74) Vertreter: Bartels und Partner, Patentanwälte
(86) Internationale Anmeldenummer: PCT/EP2016/000744
(87) Internationale Veröffentlichungsnummer: WO 2016/198140

(56) Entgegenhaltungen:
- WO-A1-2013/090458
- WO-A1-2015/039734
- DE-A1- 4 304 117
- US-A- 2 522 913
- US-A- 2 777 458
- US-A- 5 931 182

## Beschreibung

Die Erfindung betrifft ein Druckregelventil mit den Merkmalen im Oberbegriff von Anspruch 1.

Druckregelventile werden regelmäßig eingesetzt, um in einem Hydraulickreislauf einen veränderlichen Primärdruck, der häufig von einer Pumpe oder einem Hydrospeicher als Druckquelle an einen Versorgungsanschluss des Ventils geht, in einen unveränderlichen, reduzierten Sekundärdruck umzuwandeln. Zusätzlich wird hierbei das Ansteigen des Sekundärdruckes an dem zuordenbaren Nutzanschluss des Regelventiles durch externe und anwendungsspezifische Einflüsse mit einer zusätzlichen Druckentlastung zu einem weiteren Fluidanschluss des Ventils, regelmäßig in Form eines Tank- oder Rücklaufanschlusses, abgesichert. Die Ausführung als sitzdichtes Druckregelventil bewirkt das Abdichten der Verbindung von der Primärdruck- zur Regeldruckseite bzw. von der Regeldruckseite zum genannten Tank- oder Rücklaufanschluss des Ventils. Somit wird beim Erreichen eines statischen Regeldruckes ein Ansteigen dieses Druckes durch die Abdichtung zur Primärdruckseite hin verhindert. Das Absinken des Druckes über die Entlastungsfunktion setzt erst nach Überschreiten eines maximalen Druckniveaus ein. Die sitzdichte Bauweise eines Druckregelventiles unterscheidet sich von der Schieberbauweise, bei dem die Öffnungsquerschnitte der Durchströmungsrichtungen durch die axiale Verschiebung eines Ventilkolbens in einem mit Radialbohrungen versehenen Ventilkörper erfolgt.

Ein Druckregelventil ist in der EP 1 970 787 B1 aufgezeigt. Dieses bekannte Druckregel-Sitzventil für Hydrauliksysteme, insbesondere für Werkzeugmaschinen-Spannvorrichtungen, ist mit einem zwischen einem Versorgungsdruckanschluss und einem Regeldruckanschluss in Form eines Nutzanschlusses angeordneten Hauptsitz versehen, dem stromauf ein federbelastetes Hauptschließglied zugeordnet ist, das zum Einstellen des Regeldruckes durch den Hauptsitz von einem stromab des Sitzes vom Regeldruck gegen eine Regelfeder beaufschlagten Regelkolben mechanisch beaufschlagbar ist. Dadurch dass bei der bekannten Lösung in einem Strömungsweg zwischen dem Regeldruckanschluss und einem Ablass- oder Tankanschluss ein, bei einer Überhöhung des mit der Regelfeder eingestellten Regeldruckes bis zur Wiedereinstellung des Regeldruckes, mechanisch zum Ablassanschluss aufsteuerbares Ablassventil in Sitzventilbauweise angeordnet ist und dass das Ansprechen des Ablassventils und des Hauptschließgliedes gemeinsam mittels der Regelfeder einstellbar sind, ist ein Drei-Wege-Druckregelsitzventil realisiert, das zur Regeldruckeinstellung nur eine einzige Einstellmöglichkeit, nämlich für die Vorspannung der Regelfeder benötigt. Dies ist insbesondere durch die Integration des Strömungsweges zum Ablassanschluss und des Ablassventils in Sitzventilbauweise in den Strömungsweg, und mit der sowohl für das Ablassventil als auch das Hauptsitzventil wirkenden, einzigen Regelfeder erreicht.

Ausgehend von diesem Stand der Technik liegt der Erfindung die Aufgabe zugrunde, ein funktionssicheres Druckregelventil in kostengünstiger Weise zu schaffen, das sowohl neben einer Druckminderfunktion auch eine Druckbegrenzungsfunktion realisiert, wobei die Druckdifferenz zwischen dem jeweils geminderten Druck und dem Druckbegrenzungsöffnungsdruck minimiert ist, um dergestalt einen energetisch günstigen Druckregelventilbetrieb sicherstellen zu können. Insbesondere soll eine maximale Regeldruckabweichung wegen der Druckempfindlichkeit des angeschlossenen Verbrauchers erreicht werden.

Die DE 43 04 117 A1 beschreibt ein Druckregelventil mit einem unter der Wirkung eines Energiespeichers stehenden Ventilkolben, der längsverfahrbar in einem Ventilgehäuse geführt ist, das Anschlussstellen aufweist, wie einen Versorgungs-, einen Nutz- und einen Tankanschluss, die mittels eines sitzdicht schließenden Steuerteils derart ansteuerbar sind, dass bei einer Fluidverbindung vom Versorgungs- zum Nutzanschluss eine Druckminderfunktion und bei einer Fluidverbindung vom Nutz- zum Tankanschluss eine Druckbegrenzungsfunktion realisiert ist, wobei das Steuerteil eine Steuerstange mit zwei auf Abstand zueinander gehaltenen Steuerkörpern aufweist, von denen der eine zumindest die Fluidverbindung zwischen Versorgungs- und Nutzanschluss und der andere Steuerkörper zumindest die Fluidverbindung zwischen Nutz- und Tankanschluss steuert, und wobei der andere Steuerkörper des Steuerteils in sitzdichte Anlage mit einem Ventilsitz des Ventilkolbens bringbar ist, und wobei der eine Steuerkörper des Steuerteils in sitzdichte Anlage mit einem Ventilsitz des Ventilgehäuses bringbar ist, der von der Steuerstange durchgriffen ist.

Ein weiteres Druckregelventil geht aus der WO 2013/090458 A1, der US 2 522 913 und der US 2 777 458 hervor.

Eine dahingehende Aufgabe löst ein Druckregelventil mit den Merkmalen des Patentanspruches 1 in seiner Gesamtheit.

Gemäß dem Kennzeichen von Anspruch 1 ist vorgesehen, dass die Steuerkörper ballig geformte Körperabschnitte aufweisen.

Dadurch, dass das Steuerteil eine Steuerstange mit zwei auf Abstand zueinander gehaltenen Steuerkörpern aufweist, von denen der eine zumindest eine Fluidverbindung zwischen Versorgungs- und Nutzanschluss und der andere Steuerkörper zumindest eine Fluidverbindung zwischen Nutz- und Tankanschluss steuert, ist ein 3-Wege-Druckregelventil geschaffen, das in funktionssicherer und kostengünstiger Bauweise eine an sich vorgesehene Druckminderfunktion um eine Druckbegrenzungsfunktion erweitert. Sowohl die Druckminder- als auch die Druckbegrenzungsfunktion lassen sich über eine einzige Regel-Druckfeder entsprechend regulieren. Bevorzugt findet das erfindungsgemäße Druckregelventil Anwendung in der Spannhydraulik von Werkzeugmaschinen und bietet durch die zusätzliche Druckbegrenzungsfunktion eine Absicherung des Spanndruckes bei Druckerhöhungen durch externe Einflüsse.

Das erfindungsgemäße Ventil hat gegenüber den bekannten vergleichbaren Ventillösungen den Vorteil, dass der sogenannte Druck-Offset oder die Druckdifferenz zwischen dem jeweils geminderten Druck und dem zuordenbaren Druckbegrenzungs-Öffnungsdruck des Ventiles minimal ist, was zu einem energetisch günstigen Betrieb führt, und insbesondere können an das Druckregelventil angeschlossene hydraulische Verbraucher, wie Spanndruckeinheiten bei Werkzeugmaschinen, hemmnisfrei und unmittelbar betätigt werden, was auch einen großen Sicherheitsgewinn darstellt. Dadurch dass die erfindungsgemäße Ventilkonstruktion sitzdicht ausgebildet ist, sind ungewollte Leckagen im Ventilbetrieb vermieden, und das jeweilige Werkstück ist auch beim Aufbringen erhöhter Spanndrücke entsprechend gesichert. Somit kann es durch Leckageverluste nicht zu einem entsprechenden Spanndruckverlust an der Spannhydraulik der Werkzeugmaschine kommen.

Dadurch dass erfindungsgemäß die jeweils hierfür verantwortlichen Steuerkörper des Steuerteils fest über eine Steuerstange miteinander verbunden und auf Abstand zueinander gehalten sind, lässt sich Bauraum sparend mit nur einem Steuerteil sowohl die angesprochene Druckminder- als auch die Druckbegrenzungsfunktion realisieren, wobei durch die Zwangskopplung der beiden Steuerkörper über die Steuerstange ein störsicherer Betrieb gewährleistet ist.

Durch die direkte Kopplung mittels des einteiligen Steuerteils zwischen dem Druckregelsitz im Ventilgehäuse und dem Druckbegrenzungssitz ist im Ventilkolben kein zusätzlicher Leerhub über das Steuerteil mit seiner Steuerstange und den beiden Steuerkörpern notwendig, um die Druckbegrenzungsfunktion zu aktivieren. Die erwähnte Druckdifferenz zwischen geregeltem Druck und begrenztem Druck in der dichtenden Regelposition ist minimal, da keine zusätzliche Dichtkraft notwendig ist, um einen bestimmten Leerhub zu überwinden. Zum Öffnen der Druckbegrenzungsfunktion muss jedoch der Wegfall der Druckkraft, die über den Schließkolben von der Primärdruckseite übertragen wird, kompensiert werden.

Besonders vorteilhaft ist durch eine Veränderung des Sitzdurchmessers des Ventilkolbens die Druckdifferenz bis zum Aktivieren der Druckbegrenzungsfunktion zu verändern.

Das erfindungsgemäß ausgebildete Steuerteil mit Steuerstange nebst den beiden über die Steuerstange auf Abstand zueinander gehaltenen Steuerkörpern ergibt insoweit ein doppeltwirkendes Dichtelement, und aufgrund der kardanisch anzusehenden Lagerung der beiden Steuerkörper in Form von Kugelkalotten in den jeweiligen Sitzgeometrien der zuordenbaren Ventilsitze am Ventilgehäuse und am Ventilkolben ergibt sich eine Toleranzunempfindlichkeit in Bezug auf Form- und Lagetoleranzen der insoweit miteinander verbundenen Ventilbauteile. Dadurch ist eine hohe Dichtigkeit für die Druckreduzierfunktion und für die Druckbegrenzungsfunktion gegeben.

Des Weiteren ist durch die gegebene kardanische Lagerung der kritische Lastfall des kolbenartigen Schließteils mit seinen beiden Steuerkörpern auf schwellende Druckbelastungen reduziert. Dies ermöglicht eine Reduzierung des Stangendurchmessers der Steuerstange im Bereich der Sitzdurchführung im Ventilgehäuse und bietet weitere Vorteile bei der Minderung der Druckverluste beim unbelasteten Durchströmen des Druckregelventiles. Weiter vorteilhaft ist es, den Tank-, Rücklauf- oder Ablassanschluss der Druckbegrenzungsfunktion über den Ventilkolben seitlich am Ventilgehäuseteil anzuordnen, in dem der Ventilkolben längsverfahrbar geführt ist. Hierdurch lässt sich die Federseite des Ventilkolbens und mithin die Federkammer mit der darin aufgenommenen Regel-Druckfeder mit Atmosphärendruck beaufschlagen, so dass insoweit die eigentliche Druckregelfunktion somit annähernd unabhängig ist vom Druck in der Ablass-, Rücklauf- oder Tankleitung. Der dort in der zuletzt genannten Leitung herrschende Druck wirkt als Druckkraft dem Ventilkolben auf der Fläche des Druckbegrenzungssitzes entgegen, der im Bereich der freien Stirnseite des Ventilkolbens angeordnet ist, welcher wiederum dem Steuerteil zugewandt ist.

Im Folgenden wird das erfindungsgemäße Druckregelventil anhand eines Ausführungsbeispiels nach der Zeichnung näher erläutert. Dabei zeigen in prinzipieller und nicht maßstäblicher Darstellung die
- Fig. 1: einen Längsschnitt durch das erfindungsgemäße Druckregelventil;
- Fig. 2: im vergrößerten Maßstab (3:1) einen in Fig. 1 mit A bezeichneten Bildausschnitt;
- Fig. 3: einen wiederum im Maßstab vergrößerten, mit B bezeichneten Bildausschnitt (6:1) eines Ventildetails gemäß der Darstellung nach der Fig. 2; und
- Fig. 4: in der Art eines Messaufschriebes die mit dem Druckregelventil nach den Fig. 1 bis 3 realisierbare volumenstromabhängige Druckregelfunktion mit Quadrantenwechsel.

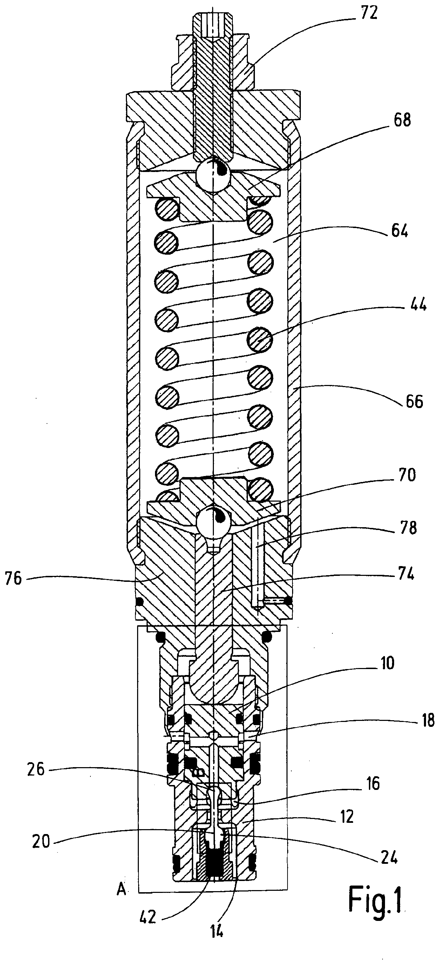

Das in Fig. 1 gezeigte Druckregelventil weist einen Ventilkolben 10 auf, der in einem Ventilgehäuse 12 längsverfahrbar geführt ist. Das Ventilgehäuse 12 weist verschiedene, voneinander separierbare Anschlussstellen auf, wie einen Versorgungsanschluss 14, einen Nutzanschluss 16 sowie einen Tankanschluss 18. Die jeweiligen Anschlussstellen können aus mehreren Einzelbohrungen bestehen, wobei der Versorgungsanschluss 14 stirnseitig in das Ventilgehäuse 12 eintritt und sowohl der Nutzanschluss 16 als auch der Tankanschluss 18 sind seitlich in radialer Richtung in das Ventilgehäuse 12, wie in Fig. 1 dargestellt, eingebracht. Der Versorgungsanschluss 14, der fachsprachlich auch mit "Versorgungsdruckanschluss" oder "Pumpendruckanschluss" bezeichnet ist, dient der Zufuhr eines Versorgungsdrucks, wie eines Pumpendrucks oder eines Hydrospeicherdrucks, in das Innere des Ventilgehäuses 12 des Druckregelventils. Regelmäßig ist auch fachsprachlich von der Primärdruckseite oder vom Primärdruckanschluss 14 die Rede. Der Nutzanschluss 16 führt zu einem nicht näher dargestellten hydraulischen Verbraucher, beispielsweise in Form eines hydraulischen Spannzylinders einer Spannvorrichtung bei einer Werkzeugmaschine. Für den Nutzanschluss 16 setzt man auch die Bezeichnung "Sekundäranschluss" oder "Sekundärdruckseite"; üblich ist auch die Angabe "Regeldruckseite" oder "Verbraucheranschluss". Für die Angabe Tankanschluss 18 wird regelmäßig auch die Angabe "Rückfuhr- oder Ablassanschluss" fachsprachlich verwendet. Die vorstehend genannten Begriffe sind insoweit kategorisiert und auf sie wird im Nachfolgenden insoweit Bezug genommen.

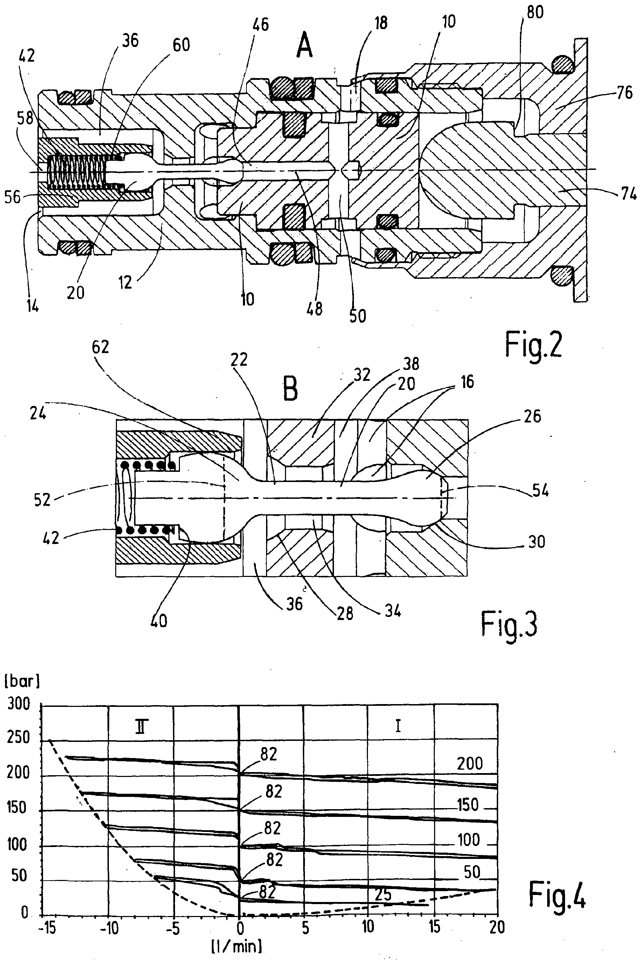

Zum Ansteuern der genannten Anschlüsse resp. Anschlussstellen dient ein Steuerteil 20, das vergrößert in der Fig. 2 und Fig. 3 wiedergegeben ist und das sitzdicht schließen kann. Das Steuerteil 20 ist derart ansteuerbar, dass bei einer Fluidverbindung vom Versorgungs- 14 zum Nutzanschluss 16 eine Druckminderfunktion und bei einer Fluidverbindung vom Nutz- 16 zum Tankanschluss 18 eine Druckbegrenzungsfunktion realisiert ist, die in Kombination eine Druckregelfunktion ermöglichen.

Wie insbesondere die Fig. 3 zeigt, weist das Steuerteil 20 eine Steuerstange 22 auf mit zwei auf Abstand zueinander gehaltenen Steuerkörpern 24, 26, von denen der eine 24 zumindest die Fluidverbindung zwischen Versorgungs- 14 und Nutzanschluss 16 und der andere Steuerkörper 26 zumindest die Fluidverbindung zwischen Nutz- 16 und Tankanschluss 18 steuert. Der eine Steuerkörper 24 des Steuerteils 20 ist in sitzdichte Anlage mit einem Ventilsitz 28 des Ventilgehäuses 12 bringbar, der von der Steuerstange 22 durchgriffen ist, wobei der andere Steuerkörper 26 des Steuerteils 20 in sitzdichte Anlage mit einem Ventilsitz 30 des Ventilkolbens 10 sitzdicht bringbar ist. Gemäß der Darstellung nach den Fig. 1 bis 3 befindet sich der zweite Steuerkörper 26 in seiner rechten Anschlaglage und mithin in dichtender Weise an seinem zugeordneten zweiten Ventilsitz 30 im Ventilkolben 10. Während der erste Ventilsitz 28 in balliger Form konisch zulaufend ausgeführt ist, weist der zweite Ventilsitz 30 einen vergleichbaren konischen Zulauf mit gerade verlaufenden Schrägflächen auf.

Die Steuerstange 22 durchgreift mit radialem Abstand eine querverlaufende Trennwand 32 im Ventilgehäuse 12 über eine Durchgriffsstelle 34, die in Blickrichtung auf die Fig. 3 gesehen an ihrem linken Ende in den ersten Ventilsitz 28 ausmündet, dessen breiteste Durchmesserstelle mit der linken Stirnwand der Trennwand 32 des Ventilkolbens 10 bündig abschließt. Der Durchmesser der Durchgriffsstelle 34 ist jedenfalls derart gewählt, dass beim Zusammenbau des Gesamtventils der zweite Steuerkörper 26 die dahingehende Durchgriffsstelle 34 auch passieren kann, um später bei fertig zusammengesetztem Ventil mit dem Ventilkolben 10 zusammenwirken zu können. Ferner unterteilt die Trennwand 32 das Ventilgehäuse in zwei Fluidräume 36, 38, von denen der eine 36 den Versorgungsanschluss 14 und der andere Fluidraum 38 den Nutzanschluss 16 aufweist. In Abhängigkeit der jeweiligen Verfahrstellung von Steuerteil 20 und Ventilkolben 10 können sich die Volumina der jeweiligen Fluidräume 36, 38 in vorgebbaren Grenzen ändern.

Der eine Steuerkörper 24 stützt sich an seinem linken Ende über einen Absatz 40 an einem Energiespeicher in Form einer Druckfeder 42 ab, die von der Fluidversorgung am Versorgungsanschluss 14 durchgriffen ist und deren Federsteifigkeit sehr viel geringer ist als die Federsteifigkeit einer Regel-Druckfeder 44, die den Ventilkolben 10 in jeder seiner Regelstellungen permanent beaufschlagt und die gleichfalls einen Energiespeicher darstellt.

Wie sich insbesondere aus der Detailzeichnung nach der Fig. 2 ergibt, weist der Ventilkolben 10 eine innere Kanalführung 46 mit einer Längsbohrung 48 und einer Querbohrung 50 auf. Die Längsbohrung 48 mündet mit ihrem einen freien Ende in den zweiten Ventilsitz 30 aus und mit ihrem anderen freien Ende in die Querbohrung 50, die wiederum endseitig im Bereich der Bohrungen für den Tankanschluss 18 ausmündet. Die axiale Länge von Steuerteil 20 und Ventilkolben 10 ist derart bemessen, dass, jedenfalls in Blickrichtung auf die Fig. 2 und 3 gesehen, in der ganz linken Verfahrstellung des Ventilkolbens 10 das Steuerteil 24 über seinen Absatz in entsprechende Anschlagslage gerät, wobei auch in dieser Anschlagstellung zumindest noch teilweise die Querbohrung 50 in fluidführender Überdeckung mit dem Tankanschluss 18 im Ventilgehäuse 12 ist. Die angesprochene innere Kanalführung 46 im Ventilkolben 10 mit Längsbohrung 48 und Querbohrung 50 erlaubt zumindest eine fluidführende Verbindung zwischen dem Nutzanschluss 16 und dem Tankanschluss 18, sobald der eine Steuerkörper 26 des Steuerteils 20 von seinem zugeordneten Ventilsitz 30 im Ventilkolben 10 abhebt.

Die beiden Steuerkörper 24, 26 weisen jeweils ballig geformte Körperabschnitte auf in der Art von Teil-Kugelkalotten und in der Fig. 3 sind die Dichtlinien für die beiden Steuerkörper 24, 26 strichliniert wiedergegeben und mit 52 und 54 bezeichnet. Ferner ergibt sich besonders aus der Fig. 2, dass der eine dem Ventilsitz 30 am Ventilkolben 10 zugeordnete Steuerkörper 26 des Steuerteils 20, bezogen auf seine genannte umlaufende Dichtlinie 52, im Durchmesser kleiner, vorzugsweise etwa 1/3 bis die Hälfte, besonders bevorzugt gerade um die Hälfte kleiner ist, als der dem Versorgungsanschluss 14 zugewandte Steuerkörper 24 mit seinem auf seine Dichtlinie 54 bezogenen Durchmesser. Durch die vorstehend beschriebene Anordnung ist jedenfalls eine sitzdichte Bauweise erreicht, indem eben immer einer der beiden Steuerkörper 24, 26 an seinem zugeordneten Ventilsitz 28, 30 in Anlage kommt oder gegebenenfalls beide Steuerkörper 24, 26 in Abhängigkeit von der jeweiligen Verfahrstellung des Ventilkolbens 10. Ebenso besteht die Möglichkeit, dass auch beide Steuerkörper 24, 26 von ihrem jeweils zugeordneten Ventilsitz 28, 30 entfernt sind, sofern die Regelaufgaben für das Druckregelventil dies erfordern.

Das Ventilgehäuse 10 weist im Bereich des Versorgungsanschlusses 14 und mit diesem fluidführend verbunden eine Ausnehmung in Form des ersten Fluidraums 36 auf, in die eine Halteeinrichtung 56 eingesetzt ist, für die Aufnahme der Druckfeder 42, an der sich der eine Steuerkörper 24 des Steuerteils 20 abstützt. Die Halteeinrichtung 56 ist in der Art eines Aufnahmetopfes ausgebildet und derart über Verbindungsstege (nicht dargestellt) in den Fluidraum 36 des Ventilgehäuses 12 eingesetzt, dass zwischen der Innenwand des Fluidraums 36 und der Außenwand der Halteeinrichtung 56 ein radialer Abstand gebildet ist, der den Zutritt von unter Druck stehendem Fluid in Richtung des Ventilkolbens 10 ermöglicht. Ferner weist die Halteeinrichtung 56 bodenseitig eine Durchgangsbohrung 58 auf, die in einen Kanal 60 ausmündet, der die Halteeinrichtung 56, in Längsrichtung gesehen, vollständig durchgreift. Dieser Kanal 60 ist im Bereich der kalottenartigen Verbreiterung des Steuerkörpers 24 gleichfalls entsprechend verbreitert und bildet insoweit eine Kavität 62 aus zwecks Aufnahme des Steuerkörpers 24.

Befindet sich der Ventilkolben 10 gemäß der Darstellung nach der Fig. 2 in seiner linken Endstellung liegt dieser mit einer stirnseitigen, absatzartigen Verbreiterung an einer innenliegenden Wandschulter des Ventilgehäuses 12 an. Der dahingehende Absatz dient als Hubanschlag für den Ventilkolben 10. Die notwendige Abdichtung erfolgt über übliche Weichdichtungen.

Die bereits angesprochene Regel-Druckfeder 44 für den Ventilkolben 10 ist gemäß der Darstellung nach der Fig. 1 in einem Federraum 64 geführt, der von Teilen 66 des Ventilgehäuses 12 umfasst und mit Umgebungsdruck beaufschlagt ist. Die Druckfeder 44 stützt sich mit ihren beiden freien Enden jeweils an einer zugeordneten Kalottenführung 68, 70 ab. Die Federkraft der Druckfeder 44 lässt sich über eine übliche Einstelleinrichtung 72 einstellen, die über eine Kugelführung auf die obere Kalottenführung 68 einwirkt. Die untere Kalottenführung 70 ist wiederum über eine Kugellagerung mit einem Betätigungsstößel 74 in Wirkverbindung, der ein Anschlussstück 76 als einem weiteren Teil des Ventilgehäuses 12 durchgreift. Das Ventilgehäuseteil 66 ist endseitig mit Wandteilen der Einstelleinrichtung 72 verbördelt sowie mit dem Anschlussstück 76. In dem Anschlussstück 76 ist ein Druckausgleichskanal 78 angeordnet, der den Umgebungs- oder Atmosphärendruck in das Innere des Federraums 64 weiterleitet. An der Stelle, an der in Blickrichtung auf die Fig. 1 gesehen das untere Ende des Betätigungsstö-ßels 74 aus dem Anschlussstück 76 heraustritt, weist das Anschlussstück 76 eine Gewindeaufnahme auf für das Einschrauben des Ventilgehäuseteils 12. Ferner ist für eine feste Verbindung zwischen Ventilgehäuse 12 und Anschlussstück 76 das untere freie Ende des Anschlussstücks 76 in Richtung auf die Außenwand des Ventilgehäuses 12 umgebördelt.

Wie sich des Weiteren aus der Fig. 2 ergibt, weist der Betätigungsstößel 74 auf seiner dem Ventilkolben 10 zugewandten Seite für die Gehäuseteile in Form des Anschlussstücks 76 einen Anschlag 80 auf, der den freien Verfahrweg des Ventilkolbens 10 in Richtung seiner Regel-Druckfeder 44 begrenzt. Ferner ist das gesamte Druckregelventil unter Einbezug seiner Führungs- und Dichtsysteme, die an dieser Stelle nicht mehr näher beschrieben werden, in sog. Patronenbauweise ausgeführt, was es ermöglicht, das Druckregelventil in einen zuordenbaren Ventilblock (nicht dargestellt) eines gesamt hydraulischen Systems sinnfällig einzusetzen.

Die Regelfunktion des erfindungsgemäßen Druckregelventils lässt sich graphisch anhand der Darstellung nach der Fig. 4 in zwei Quadranten I und II darstellen. Bei dem Messaufschrieb nach der Fig. 4 handelt es sich nur um eine exemplarische Darstellung, die die Größenverhältnisse im zu regelnden Quadrantenbetrieb erläutern soll. Auf der Ordinate der Darstellung nach der Fig. 4 ist der Sekundärdruck in bar angegeben. Auf der Abszisse ist der Volumenstrom in l/min aufgezeigt. Die querverlaufend mit 25, 50, 100, 150 und 200 bezeichneten Linien stellen Druckstufen in bar dar.

Im ersten Quadranten I ist der geregelte, insbesondere geminderte Druck bei einer definierten Ventileinstellung des erfindungsgemäßen Druckregelventils in Abhängigkeit des Volumenstroms dargestellt. Beim Übergang in den zweiten Quadranten II sinkt die Fördermenge von der Primärseite 14 in Richtung der Sekundärseite 16 auf Null. Der dafür verantwortliche Schließvorgang des Regelgliedes wird mit dem sitzdichten Schließelement 20 mit kalottenförmigen Steuerkörpern 24, 26 realisiert. Somit ist sichergestellt, das beim Erreichen des geregelten Drucks und Null-Volumenstromabnahme am Sekundäranschluss 16 kein Fluid von der Primärseite 14 zur Sekundärseite 16 fließen und einen ungewollten Druckanstieg bewirken kann. Steigt der Druck bei geschlossenem Regelglied an, öffnet im zweiten Quadranten II die Druckbegrenzungsfunktion zum Tank- oder Ablassanschluss 18. Auch diese Druckbegrenzungsfunktion arbeitet über einen angegebenen Volumenstrombereich.

Anwendung findet diese Funktion beispielsweise in der Spannhydraulik von Werkzeugmaschinen. Hierbei wird der Versorgungsdruck einer hydraulischen Anlage auf den gewünschten Spanndruck reduziert, der für das Spannen eines Werkstücks mittels Hydraulikzylinder verantwortlich ist. Beim Erreichen der gewünschten Vorspannung des Zylinders dichtet das Steuerteil 30 in Form des ersten Steuerkörpers 24 die Primärdruckseite 14 (Versorgungsdruckseite) zur Sekundärdruckseite (Spanndruckseite) 16 hin ab. Während der Bearbeitung des derart fest gespannten Werkstücks kann es durch Temperaturerhöhungen oder Bearbeitungskräfte zu Druckerhöhungen auf der Sekundärdruckseite 16 kommen. Dieser Druckanstieg wird ohne ein zusätzliches Ventil über die Druckbegrenzungsfunktion im erfindungsgemäßen Druckregelventil abgebaut. Wichtig ist hierbei, dass sich der geregelte Primärdruck am Versorgungsanschluss 14 und der Öffnungsdruck der Druckbegrenzungsfunktion gemeinsam durch eine am Regelglied in Form des Ventilkolbens 10 angreifende, gegen den Primärdruck drückende Feder, hier die Regel-Druckfeder 44, einstellen lassen. Das Ziel ist hierbei, den Druckunterschied zwischen geregeltem Druck bei Null-Volumenstrom und dem Öffnungsdruck der Druckbegrenzungsfunktion unabhängig vom Einstelldruck des erfindungsgemäßen Ventils möglichst gering zu halten, was in der Fig. 4 durch die sog. Druck-Offset-Bereiche 82 für die einzelnen Druckstufen 25 bis 200 bar bei der Null-Volumenstromlinie prinzipiell wiedergegeben ist.

Dergestalt ist mit der erfindungsgemäßen Druckregelventillösung ein Ventil gegenüber dem Stand der Technik geschaffen, bei dem der aufgezeigte Druck-Offset-Bereich 82 zwischen gemindertem Druck und Druckbegrenzungs-Öffnungsdruck minimal ist, was ein wichtiges Sicherheitsmerkmal beim Einsatz des erfindungsgemäßen Druckregelventils, insbesondere im Rahmen einer Spannhydraulik von Werkzeugmaschinen, ist. Zu den Vorteilen des Ventils gehört mithin die Energieeffizienz beim Einsatz in der Spannhydraulik von Werkzeugmaschinen durch die sitzdichte Bauweise im Vergleich zu Druckregelventilen in Schieberbauweise, insbesondere treten bei der erfindungsgemäßen Lösung keine Verluste durch dauerhaften Leckagestrom auf.

## Patentansprüche

1. Druckregelventil mit einem unter der Wirkung eines Energiespeichers stehenden Ventilkolben (10), der längsverfahrbar in einem Ventilgehäuse (12) geführt ist, das Anschlussstellen aufweist, wie einen Versorgungs- (14), einen Nutz- (16) und einen Tankanschluss (18), die mittels eines sitzdicht schließenden Steuerteils (20) derart ansteuerbar sind, dass bei einer Fluidverbindung vom Versorgungs- (14) zum Nutzanschluss (16) eine Druckminderfunktion und bei einer Fluidverbindung vom Nutz- (16) zum Tankanschluss (18) eine Druckbegrenzungsfunktion realisiert ist, wobei das Steuerteil (20) eine Steuerstange (22) mit zwei auf Abstand zueinander gehaltenen Steuerkörpern (24, 26) aufweist, von denen der eine (24) zumindest die Fluidverbindung zwischen Versorgungs- (14) und Nutzanschluss (16) und der andere Steuerkörper (26) zumindest die Fluidverbindung zwischen Nutz- (16) und Tankanschluss (18) steuert, wobei der andere Steuerkörper (26) des Steuerteils (20) in sitzdichte Anlage mit einem Ventilsitz (30) des Ventilkolbens (10) bringbar ist, und wobei der eine Steuerkörper (24) des Steuerteils (20) in sitzdichte Anlage mit einem Ventilsitz (28) des Ventilgehäuses (12) bringbar ist, der von der Steuerstange (22) durchgriffen ist, **dadurch gekennzeichnet, dass** die Steuerkörper (24, 26) ballig geformte Körperabschnitte aufweisen.

2. Druckregelventil nach Anspruch 1, **dadurch gekennzeichnet, dass** die Steuerstange (22) mit radialem Abstand eine Trennwand (32) des Ventilgehäuses (12) durchgreift, die den einen Ventilsitz (28) aufweist, und dass die Trennwand (32) das Ventilgehäuse (12) in zwei Fluidräume (36, 38) unterteilt, von denen der eine (36) den Versorgungsanschluss (14) und der andere (38) den Nutzanschluss (16) aufweist.

3. Druckregelventil nach Anspruch 1 oder 2, **dadurch gekennzeichnet, dass** der eine Steuerkörper (24) sich an einem Energiespeicher, insbesondere in Form einer Druckfeder (42) abstützt, der von der Fluidversorgung durchgriffen ist und deren Federsteifigkeit sehr viel geringer ist als die Federsteifigkeit einer Regel-Druckfeder (44), die den Ventilkolben (10) mit ihrer Federkraft in jeder seiner Regelstellungen permanent beaufschlagt.

4. Druckregelventil nach einem der vorstehenden Ansprüche, **dadurch gekennzeichnet, dass** der Ventilkolben (10) eine innere Kanalführung (46) aufweist, die zumindest eine fluidführende Verbindung zwischen dem Nutz- (16) und dem Tankanschluss (18) erlaubt, sobald der eine Steuerkörper (26) des Steuerteils (20) von seinem Ventilsitz (30) im Ventilkolben (10) abhebt.

5. Druckregelventil nach einem der vorstehenden Ansprüche, **dadurch gekennzeichnet, dass** der eine dem Ventilsitz (30) am Ventilkolben (10) zugeordnete Steuerkörper (26) des Steuerteils (20) bezogen auf seine umlaufende Dichtlinie (54) im Durchmesser kleiner, vorzugsweise etwa ein Drittel bis die Hälfte kleiner, ist als der dem Versorgungsanschluss (14) zugewandte Steuerkörper (24) mit seinem auf seine Dichtlinie (52) bezogenen Durchmesser.

6. Druckregelventil nach einem der vorstehenden Ansprüche, **dadurch gekennzeichnet, dass** das Ventilgehäuse (10) im Bereich des Versorgungsanschlusses (14) und mit diesem fluidführend verbunden eine Ausnehmung (36) aufweist, in die eine Halteeinrichtung (56) eingesetzt ist für die Aufnahme derjenigen Druckfeder (42), an deren einem freien Ende sich der eine Steuerkörper (24) des Steuerteils (20) abstützt, der zumindest teilweise in eine Kavität (62) der Halteeinrichtung (56) aufnehmbar ist.

7. Druckregelventil nach einem der vorstehenden Ansprüche, **dadurch gekennzeichnet, dass** die Regel-Druckfeder (44) für den Ventilkolben (10) in einem Federraum (64) geführt ist, der von Teilen (66) des Ventilgehäuses (12) umgeben mit Umgebungsdruck beaufschlagt ist, und dass die Regel-Druckfeder (44) an einem Ende eines Betätigungsstößels (74) angreift, dessen anderes Ende an dem Ventilkolben (10) lose anliegt, und dass der Betätigungsstößel (74) längsverfahrbar in einem Anschlussstück (76) als einem weiteren Teil des Ventilgehäuses (12) geführt ist.

8. Druckregelventil nach einem der vorstehenden Ansprüche, **dadurch gekennzeichnet, dass** der Betätigungsstößel (74) auf seiner dem Ventilkolben (10) zugewandten Seite mit den Gehäuseteilen (76), innerhalb deren er längsverfahrbar geführt ist, einen Anschlag (80) ausbildet, der den freien Verfahrweg des Ventilkolbens (10) in Richtung seiner Regel-Druckfeder (44) begrenzt.

9. Druckregelventil nach einem der vorstehenden Ansprüche, **dadurch gekennzeichnet, dass** es in Patronenbauweise ausgeführt ist zum Einsatz in einen zuordenbaren Ventilblock eines gesamthydraulischen Systems.

## Claims

1. Pressure control valve with a valve piston (10) under the action of an energy accumulator, said valve piston being mounted such that it can be displaced longitudinally in a valve housing (12), which comprises connection points such as a supply port (14), service port (16) and tank port (18) that can be controlled by means of a seat-tight closing control part (20) in such a way that a pressure reducing function is achieved when there is a fluid connection from the supply port (14) to the service port (16), and a pressure limiting function is achieved when there is a fluid connection from the service port (16) to the tank port (18), the control part (20) comprising a control rod (22) with two control bodies (24, 26) held at a distance from one another, one (24) of which controls at least the fluid connection between the supply port (14) and the service port (16) and the other control body (26) controls at least the fluid connection between the service port (16) and the tank port (18), the other control body (26) of the control part (20) being able to be brought into seat-tight contact with a valve seat (30) of the valve piston (10), and the one control body (24) of the control part (20) being able to be brought into seat-tight contact with a valve seat (28) of the valve housing (12), the control rod (22) passing through said seat, **characterised in that** the control bodies (24, 26) have spherical-shaped body sections.

2. Pressure control valve according to claim 1, **characterised in that** the control rod (22) passes through a partition wall (32) in the valve housing (12) with a radial distance, said wall comprising a valve seat (28), and **in that** the partition wall (32) subdivides the valve housing (12) into two fluid chambers (36, 38), one (36) of which comprises the supply port (14) and the other (38) comprises the service port (16).

3. Pressure control valve according to either claim 1 or claim 2, **characterised in that** one control body (24) is supported on an energy accumulator, especially in the form of a compression spring (42) through which the fluid supply passes and with a very much lower spring rigidity than the spring rigidity of a control compression spring (44) which permanently applies its spring force to the valve piston (10) in each of its control positions.

4. Pressure control valve according to any one of the preceding claims, **characterised in that** the valve piston (10) comprises an inner channel passage (46), which at least permits a fluid-conveying connection between the service port (16) and the tank port (18) as soon as one control body (26) of the control part (20) lifts off its valve seat (30) in the valve piston (10).

5. Pressure control valve according to any one of the preceding claims, **characterised in that** the one control body (26) of the control part (20) assigned to the valve seat (30) on the valve piston (10), referred to its circumferential sealing line (54), is smaller in diameter, preferably approximately one third to one half smaller, than the control body (24) facing the supply port (14) with its diameter referred to its sealing line (52).

6. Pressure control valve according to any one of the preceding claims, **characterised in that** the valve housing (10) comprises a recess (36) in the region of the supply port (14) and connected in a fluid-conveying manner to said supply port, a holding device (56) being inserted into said recess to receive the compression spring (42) that has one control body (24) of the control part (20) supported on one free end of said spring, said control body being able to be received at least partially in a cavity (62) of the holding apparatus (56).

7. Pressure control valve according to any one of the preceding claims, **characterised in that** the control compression spring (44) for the valve piston (10) is mounted in a spring chamber (64), which is surrounded by parts (66) of the valve housing and ambient pressure is applied, and **in that** the control compression spring (44) acts on one end of an actuating tappet (74), the other end of said tappet being loosely in contact with the valve piston (10), and **in that** the actuating tappet (74) is mounted as a further part of the valve housing (12) such that it can be displaced longitudinally in a connection piece (76).

8. Pressure control valve according to any one of the preceding claims, **characterised in that** the actuating tappet (74) forms a stop (80) on its side facing the valve piston (10) with the housing parts (76) within which it is mounted such that it can be longitudinally displaced, said stop delimiting the free displacement path of the valve piston (10) in the direction of its control compression spring (44).

9. Pressure control valve according to any one of the preceding claims, **characterised in that** it is designed as a cartridge structure for use in an assignable valve block of an overall hydraulic system.

## Revendications

1. Soupape de régulation de la pression comprenant un piston (10) de soupape, qui est soumis à l'action d'un accumulateur d'énergie et qui est guidé en pouvant se déplacer longitudinalement dans un corps (12) de soupape, qui a des points de raccordement, comme un raccord (14) d'alimentation, un raccord (16) utile et un raccord (18) de réservoir, qui, au moyen d'une partie (20) de commande fermant d'une manière étanche par siège, peuvent être commandés de manière à réaliser, pour une liaison fluidique du raccord (14) d'alimentation au raccord (16) utile, une fonction de détente de la pression et, pour une liaison fluidique du raccord (16) utile au raccord (18) de réservoir, une fonction de limitation de la pression, dans laquelle la partie (20) de commande a une tige (22) de commande ayant deux corps (24, 26) de commande maintenus à distance l'un de l'autre, dont l'un (24) commande la liaison fluidique entre le raccord (14) d'alimentation et le raccord (16) utile et l'autre corps (26) de commande commande au moins la liaison fluidique entre le raccord (16) utile et le raccord (18) de réservoir, dans laquelle l'autre corps (26) de commande de la partie (20) de commande peut être mis en contact étanche par siège avec un siège (30) de soupape du piston (10) de la soupape et dans laquelle l'un des corps (24) de commande de la partie (20) de commande peut être mis en contact étanche par siège avec un siège (28) de soupape du corps (12) de la soupape, qui est traversé par la tige (22) de commande, **caractérisée en ce que** les corps (24, 26) de commande ont des parties de corps conformées en boulet.

2. Soupape de régulation de la pression suivant la revendication 1, **caractérisée en ce que** la tige (22) de commande traverse à distance radiale une cloison (32) du corps (12) de la soupape, cloison qui a le siège (28) de la soupape, et **en ce que** la cloison (32) subdivise le corps (12) de la soupape en deux espaces (36, 38) pour du fluide, dont l'un (36) a le raccord (14) d'alimentation et l'autre (38) le raccord (16) utile.

3. Soupape de régulation de la pression suivant la revendication 1 ou 2, **caractérisée en ce que** l'un des corps (24) de commande s'appuie sur un accumulateur d'énergie, notamment sous la forme d'un ressort (42) de compression, qui est traversé par l'alimentation en fluide et dont la raideur de ressort est bien plus petite que la raideur de ressort d'un ressort (44) de compression de réglage, qui soumet le piston (10) de la soupape à sa force de ressort d'une manière permanente dans chacune de ses positions de réglage.

4. Soupape de régulation de la pression suivant l'une des revendications précédentes, **caractérisée en ce que** le piston (10) de la soupape a un guidage (46) intérieur à canal, qui autorise au moins une liaison fluidique entre le raccord (16) utile et le raccord (18) de réservoir dès que le un corps (26) de commande de la partie (20) de commande se soulève de son siège (30) de soupape dans le piston (10) de la soupape.

5. Soupape de régulation de la pression suivant l'une des revendications précédentes, **caractérisée en ce que** le un corps (26) de commande, associé au siège (30) de soupape du piston (10) de la soupape, de la partie (20) de commande est, rapporté à sa ligne (54) d'étanchéité faisant le tour, plus petit en diamètre, de préférence d'environ un tiers à la moitié, que le corps (24) de commande, tourné vers le raccord (14) d'alimentation, par son diamètre rapporté à sa ligne (52) d'étanchéité.

6. Soupape de régulation de la pression suivant l'une des revendications précédentes, **caractérisée en ce que** le corps (10) de la soupape a, dans la partie du raccord d'alimentation et relié fluidiquement à celui-ci, un évidement (36), dans lequel un dispositif (56) de maintien est inséré pour la réception du ressort (42) de compression, à une extrémité libre duquel s'appuie le un corps (24) de commande de la partie (20) de commande, qui peut être reçu au moins en partie dans une cavité (62) du dispositif (56) de maintien.

7. Soupape de régulation de la pression suivant l'une des revendications précédentes, **caractérisée en ce que** le ressort (44) de compression de réglage du piston (10) de la soupape est guidé dans un espace (64) pour ressort, qui est entouré de parties (66) du corps (12) de la soupape et qui est soumis à la pression ambiante et **en ce que** le ressort (44) de compression de réglage attaque à une extrémité un poussoir (74) d'actionnement, dont l'autre extrémité s'applique de manière lâche au piston (10) de la soupape et **en ce que** le poussoir (74) d'actionnement est guidé avec possibilité de se déplacer longitudinalement dans une pièce (76) de raccordement en tant qu'autre partie du corps (12) de la soupape.

8. Soupape de régulation de la pression suivant l'une des revendications précédentes, **caractérisée en ce que** le poussoir (74) d'actionnement constitue sur son côté, tourné vers le piston (10) de la soupape, avec les parties (76) du corps dans lesquelles il est guidé avec possibilité de se déplacer longitudinalement, une butée (80), qui limite le trajet de déplacement libre du piston (10) de la soupape en direction de son ressort (44) de compression de réglage.

9. Soupape de régulation de la pression suivant l'une des revendications précédentes, **caractérisée en ce qu'**elle est réalisée en mode de construction en cartouche, en vue d'être utilisée dans un bloc de soupape, pouvant être associé, d'un système hydraulique d'ensemble.
